# EUROPEAN PATENT APPLICATION

(11) **EP 2 800 229 A1**
(43) Date of publication of application: **05.11.2014**
(21) Application number: 11870829.6
(22) Date of filing: 26.12.2011
(51) Int. Cl.: H02J 7/02

(54) **CELL SYSTEM**

(71) Applicant: Hitachi, Ltd., Tokyo 100-8280 (JP)
(72) Inventor: YAMAZCHI, Shin, Ibaraki 3191 292 (JP); EMORI, Akihiko, Ibaraki 3191 292 (JP)
(74) Representative: Beetz & Partner
(86) International application number: PCT/JP2011/080097
(87) International publication number: WO 2013/098923

(57) **Abstract**

A battery system (201) includes a battery module (314) in which plural battery cells (310) are connected in series, a battery pack (203) in which the battery modules (314) are connected in series, parallel or series-parallel, and a battery block (212) in which the battery packs (203) are connected in series, parallel or series-parallel, which are mutually layered. In the battery system (201), a structure is adopted in which the battery module (314), the battery pack (203) and the battery block (212) are previously prepared as hierarchical variations of basic units, and these basic units are appropriately combined according to a required scale. According to the battery system of the invention, even when a system construction request of any scale occurs, the request can be flexibly dealt with.

## Description

### Technical Field

The present invention relates to a battery system including a battery module in which plural storage batteries are connected in series.

### Background Art

As a related art battery system, one is known in which plural battery modules each including plural series-connected storage batteries are provided in parallel to each other (see, for example, Patent Literature 1).

The battery system of Patent Literature 1 is constructed such that plural storage batteries are connected in series to form a block, plural such blocks are connected in series to form a series unit, and plural such series units are connected in parallel. A block controller is provided for each of the blocks, and monitors the states of the storage batteries in the block. Each block controller, a series controller and an overview controller are communicably connected in a raw. The series controller monitors the series unit, and the overview controller monitors the parallel structure of the series units based on the information acquired from the series controller, and monitors the state of the whole battery system.

According to the battery system of Patent Literature 1, steps to increase the voltage and capacity of the battery system can be properly taken while the states of the respective storage batteries are monitored.

### Citation List

### Patent Literature

Patent Literature 1: JP-A-2010-63259

### Summary of Invention

### Technical Problem

Recently, an electrical system (system in which power generation, transformation of electrical energy, power transmission and power distribution are integrated) using natural energy, such as wind power generation or solar power generation, called renewable energy has been prepared. With this, development and experimental introduction of a battery system for storing electric power have steadily advanced in order to compensate temporal increase and decrease in power supply capacity, which is a weak point of the electrical system using the renewable energy.

With the expansion of use as stated above, in the battery system, it is required that when an expansion request for a system scale occurs, the expansion request can be flexibly dealt with.

However, in the battery system of Patent Literature 1, when the expansion request for the system scale occurs, it can not be said that the expansion request can be flexibly dealt with.

The invention is made in view of the above circumstances, and has an object to provide a battery system in which even when an expansion request for a system scale occurs, the expansion request can be flexibly dealt with while the insulation performance of the whole system is maintained as much as possible.

### Solution to Problem

According to the invention, a battery system includes a battery module in which plural storage batteries and a first control part to acquire state information of the plural storage batteries and to transmit the acquired state information of the storage batteries to an outside are contained in an inner space of a housing, and a second control part to receive the state information of the storage batteries from the first control part, the battery module includes a first insulation part to electrically insulate the plural storage batteries and the first control part contained in the inner space of the housing from the housing, and a second insulation part to electrically insulate a communication medium used for communication of the state information between the first and the second control parts, and each of the first and the second insulation parts is set to have an insulation performance to be ensured in a previously assumed system scale.

### Advantageous Effects of Invention

According to the battery system of the invention, even when an expansion request for a system scale occurs, the expansion request can be flexibly dealt with while the insulation performance of the whole system is maintained as much as possible.

### Brief Description of Drawings

[FIG. 1] A block diagram showing the outline of a power system to which a battery system of the invention is applied.
[FIG. 2A] A circuit structural view of a 1A battery pack corresponding to a battery system of a first embodiment of the invention.
[FIG. 2B] An exploded perspective view of a battery module as a component of the first battery pack shown in FIG. 2A.
[FIG. 2C] A circuit structural view of a 1B battery pack corresponding to a battery system of a modified example of the first embodiment of the invention.
[FIG. 3A] A circuit structural view of a 2A battery pack corresponding to a battery system of a second embodiment of the invention.
[FIG. 3B] A circuit structural view of a 2B battery pack corresponding to a battery system of a modified example of the second embodiment of the invention.
[FIG. 4] A circuit structural view of a third battery pack corresponding to a battery system of a third embodiment of the invention.
[FIG. 5] An outer appearance view of a main body housing part in which the third battery pack is contained.
[FIG. 6] A block diagram conceptually showing a hierarchical structure of a battery system of the invention. Description of Embodiments

Hereinafter, a battery system according to a first to a third embodiments of the invention will be described with reference to the drawings.

### Outline of Battery System of the Invention

First, the outline of a battery system of the invention, which is common to the battery system according to the first to the third embodiments of the invention, will be described.

The battery system of the invention includes a battery module in which plural storage batteries and a first control part (after-mentioned battery cell monitor part 218) to acquire state information of the plural storage batteries and to transmit the acquired state information of the storage batteries to an outside are contained in an inner space of a housing, and a second control part (after-mentioned battery control unit 21, etc.) to receive the state information of the storage batteries from the first control part.

The battery system of the invention includes a first insulation part to electrically insulate the plural storage batteries and the first control part contained in the inner space of the housing from the housing, and a second insulation part to electrically insulate a communication medium used for transmission and reception of the state information between the first and the second control parts, and each of the first and the second insulation parts is set to have an insulation performance to be ensured in a previously assumed system scale.

Incidentally, the insulation performance to be ensured in the previously assumed system scale means an insulation performance capable of withstanding the total voltage of a battery system when the battery system is assumed to have a certain system scale.

Here, there is a problem of how to previously assume the scale of the battery system as the "previously assumed system scale". There are two ways of thinking on this point. The first way of thinking is to previously assume a battery system with a scale regarded as having the highest need. The second way of thinking is to previously assume a battery system with a scale in accordance with regulations such as laws in each country and in view of the frame of regulation.

An example of the second way of thinking will be described. For example, according to the Japanese law, DC power exceeding 7000 V is classified as "extra-high voltage", DC power exceeding 750 V and not higher than 7000 V is classified as "high voltage", and DC power not higher than 750 V is classified as "low voltage". The degree of regulation varies according to the respective frames. Specifically, in the frame of the "low voltage", the degree of regulation is low as compared with the "extra-high voltage" or the "high voltage". Then, for example, the DC power of 750 V corresponding to the frame of the "low voltage" is assumed to be the "previously assumed system scale". As stated above, if the scale of the battery system is previously assumed in view of the frame of regulation, the preferable system scale in view of regulations in each country can be assumed.

According to the battery system of the invention, since each of the first and the second insulation parts is set to have the insulation performance to be ensured in the previously assumed system scale, even when an expansion request for a system scale occurs, the expansion request can be flexibly dealt with while the insulation performance of the whole system is maintained as much as possible.

In the electrical system using the natural energy, such as wind power generation or solar power generation, has a merit that a load exerted on natural environment is low, however, the power generation capacity is influenced by the natural environment. Specifically, since the intensity of wind force or sun light varies from hour to hour, there is a fear that a bad influence such as frequency variation or voltage variation is exerted on the electrical system.

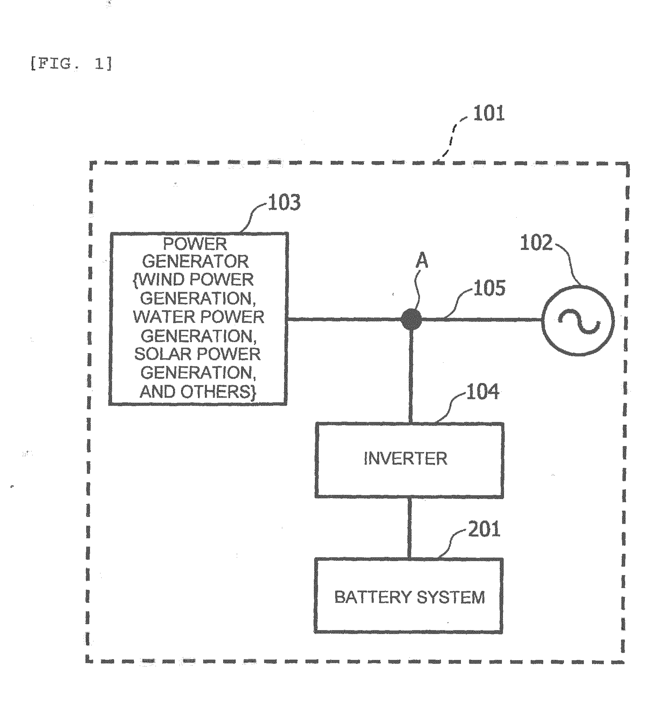

As one of approaches to remove such a fear, a power system is proposed in which a battery system is provided to a natural energy power generator, and the frequency variation or voltage variation of an electrical system is suppressed. FIG. 1 is a block diagram showing the outline of a power system 101 to which a battery system 201 of the invention is applied.

As shown in FIG. 1, the power system 101 includes an electrical system 102, a power generator 103, an inverter 104 and the battery system 201 of the invention.

Incidentally, the battery system 201 of the invention is a concept including battery systems of the first to the third embodiments described later.

The power generator 103 has a function to supply power generated from, for example, natural energy to the electrical system 102. An electric wire 105 to connect the power generator 103 and the electrical system 102 is connected with the battery system 201 of the invention through a coupling point A and the inverter 104.

The inverter 104 has a function to convert power generated by the power generator 103 into DC power and to send the converted DC power to the battery system 201, and a function to convert the DC power stored in the battery system 201 into AC power and to send the converted AC power to the electrical system 102. Power transmission to a load is performed through the AC electrical system 102.

When the natural energy power generator 103 is adopted as the power generator 103, the output varies by influence of change of natural environment such as weather or season. The output variation causes the frequency variation and voltage variation of the electrical system 102, and the power quality of the electrical system 102 is degraded.

In this point, the battery system 201 of the invention functions so that the frequency and voltage variation of the electrical system 102 falls within a specified range. That is, the battery system 201 has the so-called buffer function, that is, if excessive power is supplied to the electrical system 102, the excessive power is charged in the battery system 201, and if power is insufficient, power stored in the battery system 201 is discharged. By this, the battery system 201 of the invention can suppress the frequency variation and the voltage variation of the electrical system 102.

### Battery System (1A battery pack 203-1A) of the First Embodiment of the Invention

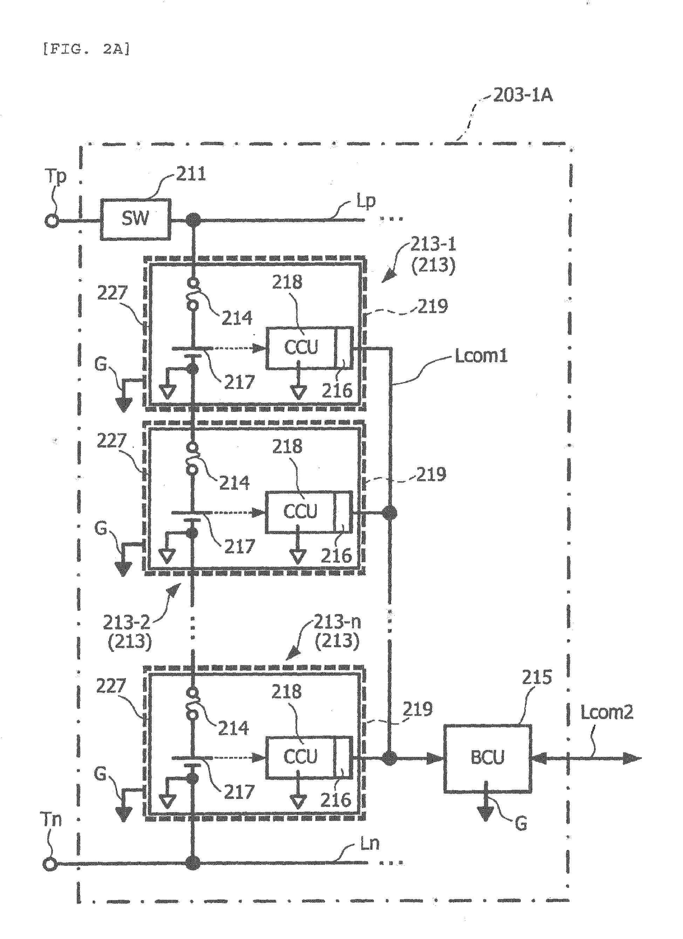

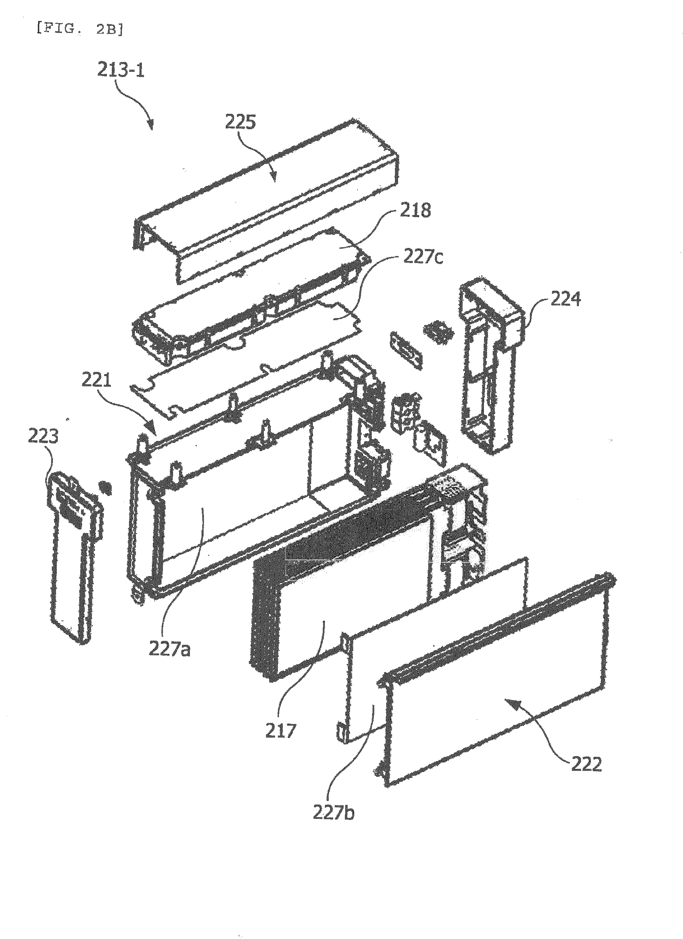

Next, the battery system of the first embodiment of the invention will be described with reference to FIG. 2A and FIG. 2B. FIG. 2A is a circuit structural view of a 1A battery pack 203-1A corresponding to the battery system of the first embodiment of the invention. FIG. 2B is an exploded perspective view of a battery module 213-1 as a component of the 1A battery pack 203-1A shown in FIG. 2A.

Incidentally, the battery module 213-1 shown in FIG. 2B is commonly used also in the battery systems of the second and the third embodiments described later.

As shown in FIG. 2A, the 1A battery pack 203-1A is provided between a positive electrode bus line Lp connected to a positive electrode terminal Tp and a negative electrode bus line Ln connected to a negative electrode terminal Tn. The positive electrode terminal Tp is indirectly connected to a positive electrode bus line (not shown) of the electrical system 102 through a breaker, an interrupter or the like. Similarly, the negative terminal Tn is also indirectly connected to a negative electrode bus line (not shown) of the electrical system 102 through a breaker, an interrupter or the like.

The 1A battery pack 203-1A includes a change-over switch 211, plural battery module groups 213 each including plural battery modules 213-1, 213-2, ••• 213-n (n is an arbitrary natural number, and the same applies to the following), and a battery control unit (BCU) 215. In brief, the 1A battery pack 203-1A is constructed such that the plural battery module groups 213 are connected in parallel (or in combination of series and parallel) between the positive electrode bus line Lp and the negative electrode bus line Ln.

Incidentally, the battery module group 213 is a concept collectively referring to the plural battery modules 213-1, 213-2, ••• 213-n and is used in the description of the specification, however, it is not illustrated.

Incidentally, in the following, each of the plural battery modules 213-1, 213-2, ••• 213-n has a common basic structure. Then, the structure of the one battery module 213-1 is typically described, and the description of the structures of the other battery modules 213-2, ••• 213-n is omitted.

The change-over switch 211 has a function to switch the electrical connection relation of the 1A battery pack 203-1A and the electrical system 102 between connection and disconnection.

The battery module 213-1 is constructed such that a fuse 214 which is melted when an abnormal current exceeding allowable capacity flows and opens a circuit, a battery cell group 217 including plural battery cells connected in series, and the battery cell monitor part (CCU) 218 are respectively contained in an inner space of an individual housing 219 (see FIG. 2A and FIG. 2B). The individual housing 219 corresponds to the "housing" of the invention.

The battery cell group 217 has a function to temporarily charge DC power supplied from the electrical system 102 through the inverter 104 and to discharge the DC power stored in the battery cell group 217 as the need arises. The battery cell group 217 is a component corresponding to the "plural batteries" of the invention.

The battery cell monitor part (CCU) 218 has a function to measure an inter-terminal voltage, temperature and current of each of the battery cells constituting the battery cell group 217 and to acquire information relating to a charge state (SOC: State Of Charge; hereinafter sometimes abbreviated to SOC) of each of the battery cells and an operating state of the battery cell group 217. Besides, the battery cell monitor part 218 has a function to perform diagnosis of over-charge or over-discharge based on the inter-terminal voltage of each of the battery cells. The battery cell monitor part 218 is a component corresponding to the "first control part" of the invention.

The battery cell monitor part 218 includes an insulation communication element 216 made of, for example, a photocoupler. The insulation communication element 216 of the battery cell monitor part 218 of the battery module 213-1 is connected to the insulation communication element 216 of the battery cell monitor part 218 of another battery module and the battery control unit (BCU) 215 through a communication medium Lcom1 such as a communication line. A bus system to realize bidirectional information communication is adopted as the communication medium Lcom1. By this, the battery cell monitor part 218 can communicate a variety of information including information (corresponding to the "state information of the battery" of the invention) relating to the charge state of each of the battery cells and the operating state to another battery module or the battery control unit (BCU) 215.

Here, an important point is that communication between a certain battery module and another battery module or the battery control unit (BCU) 215 through the communication medium Lcom1 is performed through the insulation communication element 216 (corresponding to the "second insulation part" of the invention), so that insulation is strongly performed with insulation performance (insulation performance of the whole system) to be ensured in a previously assumed system scale, that is, with excessive quality for each member.

The battery control unit 215 has a function to acquire information (including the information relating to the charge state of each of the battery cells and the operating state) relating to the charge state and the operating state of each of the battery modules belonging to the battery module group 213 by performing information communication with the battery module group 213 through the communication medium Lcom1. Besides, as shown in FIG. 2A, the battery control unit 215 has a function to acquire information relating to the charge state and the operating state of the whole battery system by performing information communication with an after-mentioned host managing device through a communication medium Lcom2. The battery control unit 215 is a component corresponding to the "second control part" of the invention.

Next, the mechanism of the battery module 213-1 will be described. As shown in FIG. 2B, the battery module 213-1 includes a metal container 221 constituting a part of the individual housing 219 (see FIG. 2A) and a cover part 222. The container 221 is formed into a rectangular box shape with one open surface. The cover part 222 is formed into a substantially flat plate shape. The inner space of the individual housing 219 can be brought into a substantially hermetically-closed state by covering the open surface of the container 221 with the cover part 222.

A front panel 223 having a substantially T-shape when viewed from the front side is provided on the front side of the container 221. A back panel 224 having a substantially T-shape when viewed from the back side is provided on the back side of the container 221. An upper panel 225 having a substantially rectangular shape when viewed from the upper side is provided on the upper side of the container 221.

The inner space of the individual housing 219 includes a space surrounded by the container 221 and the cover part 222 and a space surrounded by the upper side of the container 221 and the upper panel 225.

The battery cell group 217 and insulation sheets 227a and 227b are contained in the former space surrounded by the container 221 and the cover part 222. The periphery of the battery cell group 217 is covered with the insulation sheets 227a and 227b. Besides, the outsides of the insulation sheets 227a and 227b are covered with the combination of the container 221 and the cover part 222. The insulation sheets 227a and 227b are preferably formed of film members made of resin having electrical insulation properties, such as polyethylene terephthalate or polyimide. The insulation sheets 227a and 227b have a function to electrically insulate the battery cell group 217 from the individual housing 219.

On the other hand, the battery cell monitor part 218 mounted on a circuit board and an insulation sheet 227c are contained in the latter space surrounded by the upper side of the container 221 and the upper panel 225. Similarly to the above, the insulation sheet 227c is preferably formed of a film member made of resin having electrical insulation properties, such as polyethylene terephthalate or polyimide. The insulation sheet 227c is provided to intervene between the upper side of the container 221 and the battery cell monitor part 218. By this, the electrical insulation performance between the battery cell group 217 and the battery cell monitor part 218 and between the individual housing 219 and the inner space is strengthened.

Incidentally, in the following description, when the term "insulation sheet" is used while attention is paid to the electrical insulation function, the generic name "insulation sheet 227" is used.

Here, an important point is that the individual housing 219 is strongly insulated from the battery cell group 217 existing in the inner space by the combination (corresponding to the "first insulation part" of the invention) of the insulation sheet 227 and the separation of the spatial distance (including both clearance and creepage distance) and with insulation performance (insulation performance of the whole system) to be ensured in the previously assumed system scale, that is, with excessive quality for respective members.

Incidentally, the clearance means the shortest distance through a space between a pair of conductive members. The creepage distance means the shortest distance along the surface of an insulator between a pair of conductor members.

When the spatial distance as the concept including both the clearance and the creepage distance is set, consideration is preferably paid to influences of plural factors including the level of an operating voltage or an assumed overvoltage, the tracking resistance of an insulator, and the like. This is because the desired insulation performance (insulation strength) can be accurately realized.

A reference potential of the individual housing 219 of the battery module 213-1 constructed as stated above and a reference potential of the battery control unit (BCU) 215 are set to a common potential as indicated by a ground terminal G designated by a black arrow in FIG. 2A. Specifically, the ground terminal G of the individual housing of each of the battery modules belonging to the battery module group 213 and the ground terminal G of the battery control unit 215 are connected through a not-shown earth wire, and the earth wire is grounded. By this, the reference potential of each of the battery modules belonging to the battery module group 213 and the reference potential of the battery control unit 215 are set to the common ground potential.

Besides, a reference potential (lowest potential of the battery cell group 217) of the battery cell group 217 and a reference potential of the battery cell monitor part (CCU) 218 are set to a common potential as indicated by a white arrow in FIG. 2A.

### Operation and Effects of the Battery System (1A Battery Pack 203-1A) of the First Embodiment of the Invention

In the 1A battery pack 203-1A corresponding to the battery system of the first embodiment of the invention, even if voltage is raised by adding battery modules (within the range of the previously assumed system scale), the individual housing 219 is strongly insulated from the battery cell group 217 existing in the inner space by the combination of the insulation sheet 227 and the separation of the spatial distance and with the insulation performance to be ensured in the previously assumed system scale, that is, with the sufficient (or excessive) quality for the respective members.

Besides, the reference potential of each of the battery modules belonging to the battery module group 213 and the reference potential of the battery control unit 215 are set to the common ground potential.

Further, communication through the communication medium Lcom1 between a certain battery module and another battery module or the battery control unit (BCU) 215 is strongly insulated by performing the communication through the insulation communication element 216 and with the insulation performance to be ensured in the previously assumed system scale, that is, with the sufficient (or excessive) quality for the respective members.

According to the 1A battery pack 203-1A corresponding to the battery system of the first embodiment of the invention, even when an expansion request for a system scale occurs, the expansion request can be flexibly dealt with while the insulation performance of the whole system is maintained as much as possible.

### Battery System (1B Battery Pack 203-1B) of Modified Example of the First Embodiment of the Invention

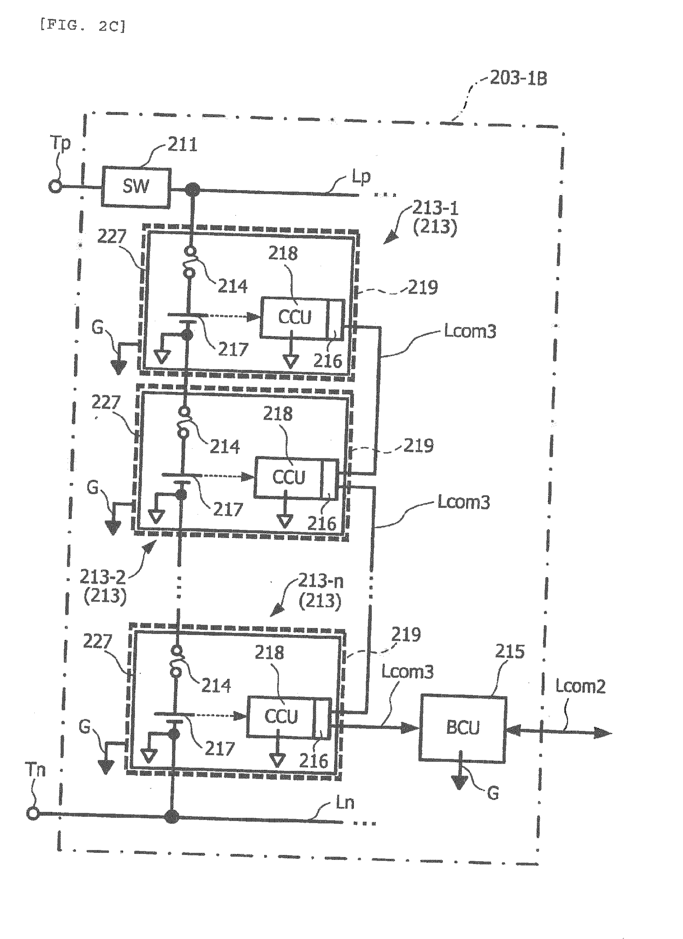

Next, a battery system of a modified example of the first embodiment of the invention will be described with reference to FIG. 2C. FIG. 2C is a circuit structural view of a 1B battery pack 203-1B corresponding to the battery system of the modified example of the first embodiment of the invention.

The 1A battery pack 203-1A and the 1B battery pack 203-1B have a common structure except for a structure relating to a communication medium. Then, different points between the both will be described instead of describing the battery system of the modified example of the first embodiment of the invention.

In the 1A battery pack 203-1A, the bus system to realize the bidirectional information communication is adopted as the communication medium Lcom1. On the other hand, in the 1B battery pack 203-1B, a so-called daisy chain system is adopted as a communication medium Lcom3. The daisy chain system is a communication system to allow information communication between communication nodes (respective battery modules and a battery control unit (BCU) 215) adjacent to each other. The communication is performed through an insulation communication element 216, and this is the same as the 1A battery pack 203-1A.

Next, the operation of the daisy chain system will be described. A battery module 213-1 existing at the highest potential side sends information relating to a charge state and an operating state of the battery module 213-1 to an adjacent battery module 213-2 at a lower potential side. In response to this, the battery module 213-2 sends information of two modules, in which information relating to a charge state and an operating state of itself (the battery module 213-2) is added to the information relating to the charge state and the operating state of the battery module 213-1, to an adjacent battery module (not shown) at a lower potential side.

Information relating to the charge states and the operating states of the battery modules 213-1 to 213-(n-1) existing at a higher potential side is transmitted to a battery module 213-n existing at the lowest potential side. In response to this, the battery module 213-n existing at the lowest potential side sends information of n modules, in which information relating to a charge state and an operating state of itself (the battery module 213-n) is added to the information relating to the charge states and the operating states of the battery modules 213-1 to 213-(n-1), to the battery control unit (BCU) 215.

Information communication from the battery control unit (BCU) 215 to either one of the battery module groups 213 is performed by a procedure opposite to the above.

According to the 1B battery pack 203-1B corresponding to the battery system of the modified example of the first embodiment, similarly to the 1A battery pack 203-1A, even when an expansion request for a system scale occurs, the expansion request can be flexibly dealt with while the insulation performance of the whole system is maintained as much as possible.

### Battery System (2A Battery Pack 203-2A) of Second Embodiment of the Invention

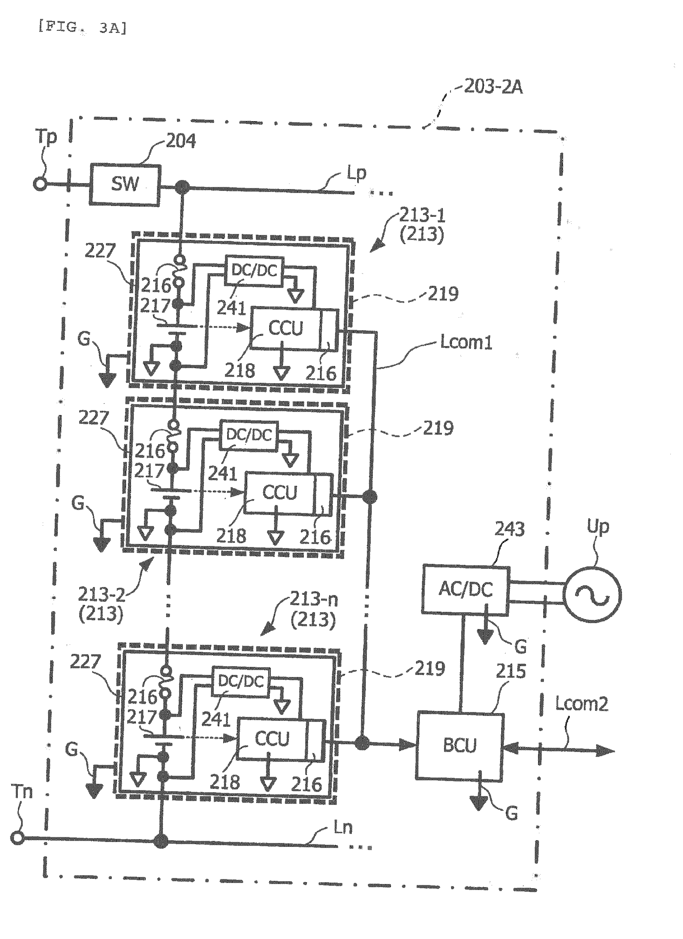

Next, a battery system of a second embodiment of the invention will be described with reference to FIG. 3A. FIG. 3A is a circuit structural view of a 2A battery pack 203-2A corresponding to the battery system of the second embodiment of the invention.

The 1A battery pack 203-1A and the 2A battery pack 203-2A have a common structure except for a structure of a power supply source to respective battery modules and a battery control unit (BCU) 215. Then, different points between the both will be described instead of describing the battery system of the second embodiment of the invention.

In the 1A battery pack 203-1A, a power supply source to each of the battery modules and the battery control unit (BCU) 215 is not particularly mentioned. In the 2A battery pack 203-2A, with respect to each of the battery modules, a DC/DC converter 241 is adopted, to which an inter-terminal DC voltage of a battery cell group 217 belonging to each is inputted and which outputs a DC voltage having an appropriate level. Besides, with respect to the battery control unit (BCU) 215, an AC/DC converter 243 is adopted, to which an AC voltage of a commercial power supply Up is inputted and which outputs a DC voltage having an appropriate level.

Besides, a reference potential of the DC/DC converter 241, a reference potential (lowest potential of the battery cell group 217) of the battery cell group 217, and a reference potential of a battery cell monitor part (CCU) 218 are set to a common potential as indicated by white arrows in FIG. 3A.

Incidentally, similarly to the above, an earth wire is used in a common potential setting method. Besides, a common potential setting method described below is the same in that an earth wire is used.

Further, a reference potential of the AC/DC converter 243, a reference potential of each of battery modules belonging to a battery module group 213, and a reference potential of the battery control unit 215 are set to a common ground potential as indicated by ground terminals G designated by black arrows in FIG. 3A.

The other structure is the same as the 1A battery pack 203-1A.

Operation and Effects of the Battery System (2A Battery Pack 203-2A) of the Second Embodiment of the Invention According to the 2A battery pack 203-2A corresponding to the battery system of the second embodiment of the invention, as the power supply source to each of the battery modules, the DC/DC converter 241 is adopted, to which the inter-terminal DC voltage of the battery cell group 217 belonging to each is inputted and which outputs the DC voltage having the appropriate level. Besides, as the power supply source to the battery control unit (BCU) 215, the AC/DC converter 243 is adopted, to which the AC voltage of the commercial power supply Up is inputted and which outputs the DC voltage having the appropriate level. Thus, in addition to the operation and effects of the battery system of the first embodiment of the invention, versatility and convenience at the time of installation of the battery system can be ensured from the viewpoint of increasing the options of power supply sources.

### Battery System (2B Battery Pack 203-2B) of Modified Example of the Second Embodiment of the Invention

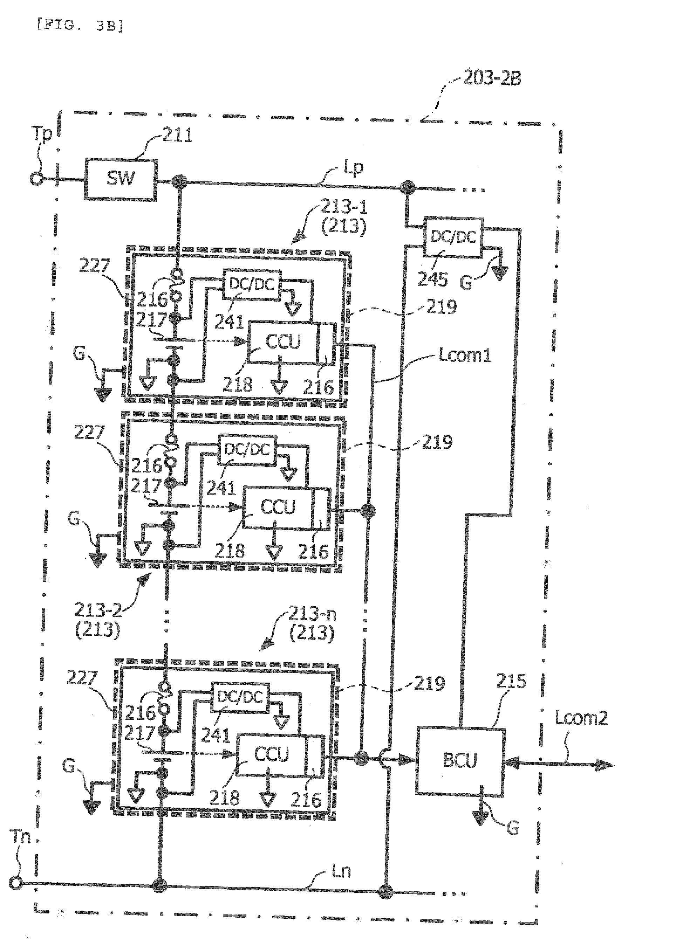

Next, a battery system of a modified example of the second embodiment of the invention will be described with reference to FIG. 3B. FIG. 3B is a circuit structural view of a 2B battery pack 203-2B corresponding to the battery system of the modified example of the second embodiment of the invention.

The 2A battery pack 203-2A and the 2B battery pack 203-2B have a common structure except for a structure of a power supply source to a battery control unit (BCU) 215. Then, different points between the both will be described instead of describing the battery system of the modified example of the second embodiment of the invention.

In the 2A battery pack 203-2A, the AC/DC converter 243 is adopted as the power supply source to the battery control unit (BCU) 215. On the other hand, in the 2B battery pack 203-2B, a DC/DC converter 245 is adopted, to which an inter-line DC voltage between a positive electrode bus line Lp and a negative electrode bus line Ln is inputted and which outputs a DC voltage having an appropriate level. Besides, a reference potential of the DC/DC converter 245, a reference potential of each of battery modules belonging to a battery module group 213, and a reference potential of the battery control unit 215 are set to a common ground potential as indicated by ground terminals G designated by black arrows in FIG. 3B.

The other structure is the same as the 2A battery pack 203-2A.

Operation and Effects of the Battery system (2B Battery Pack 203-2B) of the Modified Example of the Second Embodiment of the Invention

According to the 2B battery pack 203-2B corresponding to the battery system of the modified example of the second embodiment of the invention, as the power supply source to the battery control unit (BCU) 215, the DC/DC converter 245 is adopted, to which the inter-line DC voltage between the positive electrode bus line Lp and the negative electrode bus line Ln is inputted and which outs the DC voltage having the appropriate level. Accordingly, similarly to the operation and effects of the battery system of the second embodiment of the invention, versatility and convenience at the time of installation of the battery system can be ensured from the viewpoint of increasing the options of power supply sources.

### Battery System (Third Battery Pack 203-3) of Third Embodiment of the Invention

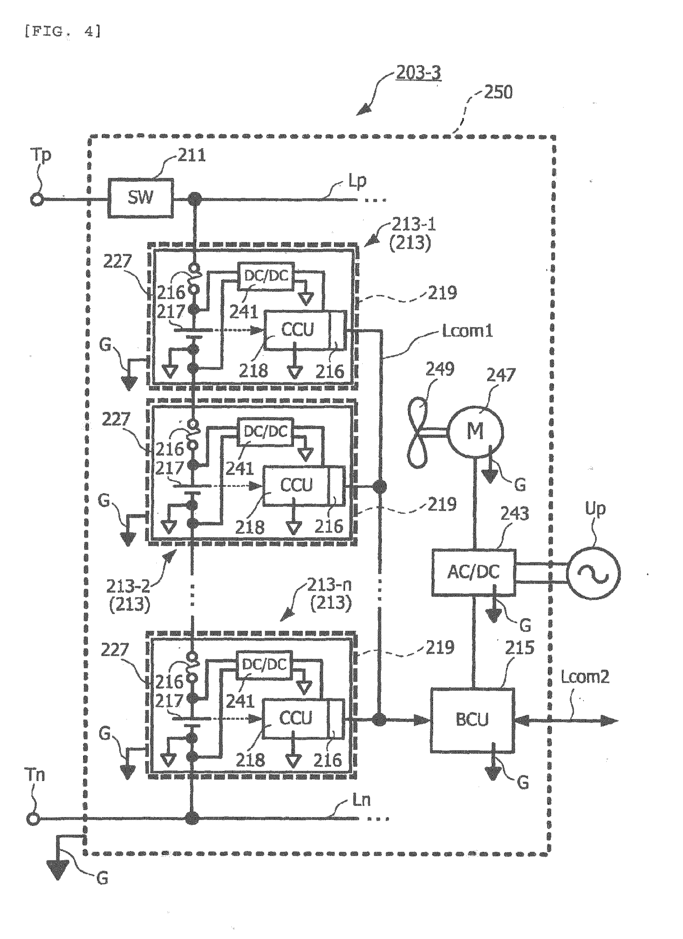

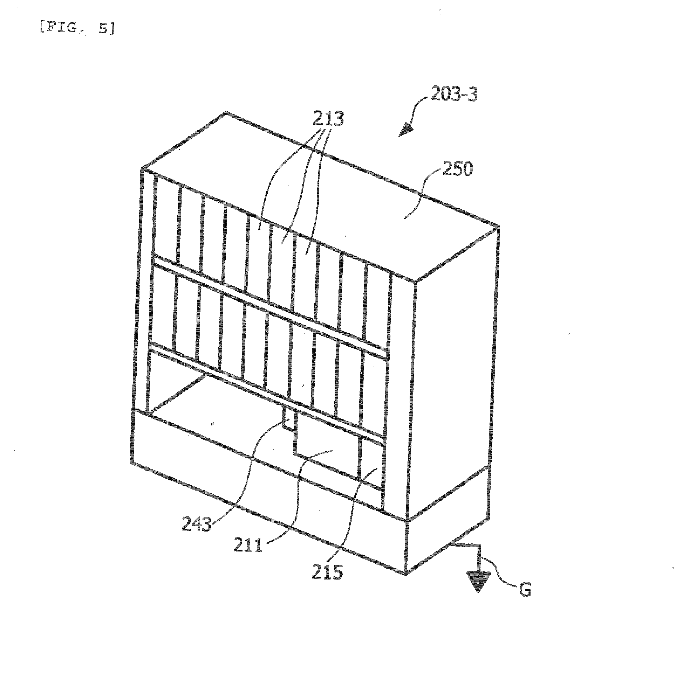

Next, a battery system of a third embodiment of the invention will be described with reference to FIG. 4 and FIG. 5. FIG. 4 is a circuit structural view of a third battery pack 203-3 corresponding to the battery system of the third embodiment of the invention. FIG. 5 is an outer appearance view of a main body housing part 250 in which the third battery pack 203-3 is contained.

The 2A battery pack 203-2A and the third battery pack 203-3 have a common structure except that a blower fan 249 driven by a fan motor 247 is provided as a load, the whole third battery pack 203-3 is contained in the main body housing part 250, and the main body housing part 250 is set to ground potential. Then, different points between the both will be described instead of describing the battery system of the third embodiment of the invention.

In the 2A battery pack 203-2A, only the battery control unit (BCU) 215 is adopted as a load connected to the AC/DC converter 243. On the other hand, in the third battery pack 203-3, the blower fan 249 driven by the fan motor 247 is added, and a reference potential of the fan motor 247 is set to the ground potential.

Besides, in the 2A battery pack 203-2A, a specific structure is not described as a storage portion of the battery module group 213. On the other hand, in the third battery pack 203-3, as shown in FIG. 4 and FIG. 5, the main body housing part 250 is adopted as a storage portion of the battery module group 213. Further, a reference potential of the main body housing part 250, a reference potential of an AC/DC converter 243, a reference potential of each of battery modules belonging to the battery module group 213, and a reference potential of a battery control unit 215 are set to a common ground potential as indicated by ground terminals G designated black arrows in FIG. 4.

The other structure is the same as the 2A battery pack 203-2A.

### Operation and Effects of the Battery System (Third Battery Pack 203-3) of the Third Embodiment of the Invention

According to the third battery pack 203-3 corresponding to the battery system of the third embodiment of the invention, the battery module group 213 is contained in the main body housing part 250, and the reference potential of the main body housing part 250 is set to the ground potential common to the reference potential of the battery control unit 215 and the like. Thus, in addition to the operation and effects of the battery system of the second embodiment of the invention, the insulation performance of the whole system can be further improved.

Besides, a peripheral equipment such as the blower fan 249 driven by the fan motor 247 is provided as the load connected to the AC/DC converter 243, and the reference potential of the peripheral equipment is set to the ground potential. Thus, versatility and convenience at the time of installation of the battery system can be ensured from the viewpoint that additional peripheral equipments can be easily installed.

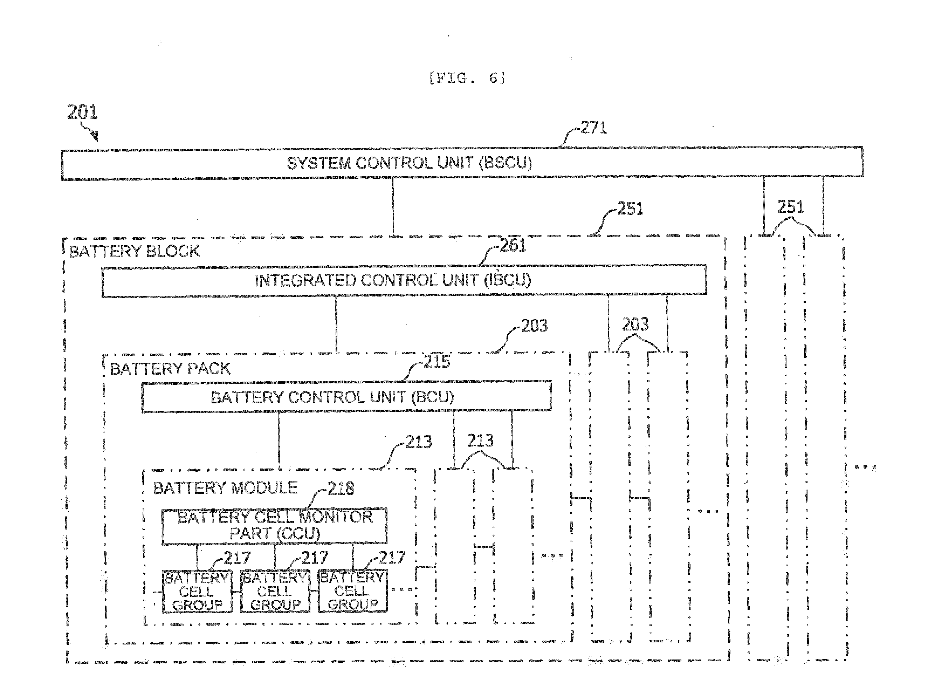

Here, a hierarchical structure of the battery system 201 of the invention will be described with reference to FIG. 6. FIG. 6 is a block diagram conceptually showing the hierarchical structure of the battery system 201 of the invention.

In the battery system 201 of the invention, as shown in FIG. 6, a battery module 213 in which battery cell groups 217 are connected in series, a battery pack 203 in which the battery modules 213 are connected in series and parallel, and a battery block 251 in which the battery packs 203 are connected in parallel are mutually layered.

The battery block 251 includes the plural battery packs 203 of the first to the third embodiment, and an integrated control unit (IBCU) 261 to perform operation management of the plural battery packs 203.

Besides, each of the plural battery blocks 251 is connected to a system control unit (BSCU) 271 to perform operation management of the plural battery blocks 251.

The battery control unit (BCU) 215 belonging to the battery pack 203 reports information relating to the charge state and the operating state of the battery cell group 217 acquired from the battery cell monitor part 218 and management information of the battery pack 203 to the integrated control unit (IBCU) 261 as its own host control unit and the system control unit (BSCU) 271. Accordingly, the battery control unit (BCU) 215 corresponds to the "second control part" of the invention.

The integrated control unit (IBCU) 261 belonging to the battery block 251 reports information acquired from the battery control unit (BCU) 215 and management information of the battery block 251 to the system control unit (BSCU) 271. Accordingly, the integrated control unit (IBCU) 261 also corresponds to the "second control part" of the invention.

### Other Embodiments

In the plural embodiments described above, the specific examples of the invention are described. Accordingly, the technical scope of the invention should not be limitedly interpreted by these. The invention can be carried out in various modes without departing from the sprit or the main features of the invention.

For example, in the description of the battery system of the third embodiment, although the structure is exemplified in which the third battery pack 203-3 is contained in the main body housing part 250, and the reference potential of the main body housing part 250 is set to be common to the reference potential of each of the battery modules belonging to the battery module group 213 and the reference potential of the battery control unit 215, the invention is not limited to this example.

In the battery system (modified example) of the first or the second embodiment, a structure may be adopted in which the first or the second battery pack is contained in the main body housing part 250, and the reference potential of the main body housing part 250 is set to be common to the reference potential of each of the battery modules belonging to the battery module group 213 and the reference potential of the battery control unit 215.

Besides, in the description of the battery system of the first embodiment of the invention, although the structure is exemplified in which the insulation sheet 227 is provided to intervene between the upper side of the container 221 and the battery cell monitor part 218, the invention is not limited to this example. A structure may be adopted in which the insulation sheet 227 is provided to cover the whole surface of the container 221 containing the battery cell group 217.

Besides, in the description of the battery system of the first embodiment of the invention, although the description is made while using the example in which the combination of the insulation sheet 227 and the separation of the spatial distance is adopted as the structure of the "first insulation part" of the invention, the invention is not limited to this example. The "first insulation part" of the invention may be constructed by using only one of the insulation sheet 227 and the separation of the spatial distance.

Finally, in the description of the battery system of the first embodiment of the invention, although the description is made while the combination of the insulation sheet 227 and the separation of the spatial distance is exemplified as the "first insulation part" of the invention, the insulation communication element 216 made of, for example, a photocoupler is exemplified as the "second insulation part" of the invention, the invention is not limited to this example. As the "first insulation part" or the "second insulation part" of the invention, it is needless to say that as long as desired insulation performance is obtained, any insulation unit may be arbitrarily adopted.

### Reference Signs List

201 battery system of the invention
203-1A 1A battery pack (battery system of the first embodiment of the invention)
203-1B 1B battery pack (battery system of modified example of the first embodiment of the invention)
203-2A 2A battery system (battery system of the second embodiment of the invention)
203-2B 2B battery pack (battery system of the modified example of the second embodiment of the invention)
203-3 third battery pack (battery system of the third embodiment of the invention)
211 change-over switch
213 battery module group
213-1 to 213-n battery module
214 fuse
215 battery control unit (BCU; second control part)
216 insulation communication element (second insulation part)
217 battery cell group (plural batteries)
218 battery cell monitor part (CCU; first control part)
219 individual housing (housing)
227a, 227b, 227c insulation sheet (first insulation part)
241 DC/DC converter
243 AC/DC converter
245 DC/DC converter
247 fan motor
249 blower fan
250 main body housing
251 battery block
261 integrated control unit (IBCU)
271 system control unit (BSCU)

## Claims

1. A battery system comprising:
a battery module in which a plurality of storage batteries and a first control part to acquire state information of the plurality of storage batteries and to transmit the acquired state information of the storage batteries to an outside are contained in an inner space of a housing; and
a second control part to receive the state information of the storage batteries from the first control part, wherein
the battery module includes
a first insulation part to electrically insulate the plurality of storage batteries and the first control part contained in the inner space of the housing from the housing, and
a second insulation part to electrically insulate a communication medium used for communication of the state information between the first and the second control parts, and
each of the first and the second insulation parts is set to have an insulation performance to be ensured in a previously assumed system scale.

2. The battery system according to claim 1, wherein a reference potential of the housing and a reference potential of the second control part are set to be common.

3. The battery system according to claim 1 or 2, wherein the first insulation part is a film-like insulation element to cover the plurality of storage batteries and the first control part contained in the inner space of the housing.

4. The battery system according to claim 1 or 2, wherein the first insulation part is a clearance or a creepage distance between the housing and the plurality of storage batteries and the first control part contained in the inner space of the housing.

5. The battery system according to claim 2, wherein a reference potential of each of the housing and the second control part is set to a ground potential.

6. The battery system according to claim 4, wherein a reference potential of the battery system is set to a ground potential.

7. The battery system according to any one of claims 1 to 5, further comprising a first power supply to supply power to the first control part and a second power supply to supply power to the second control part individually.

8. The battery system according to claim 7, wherein the first power supply is a DC/DC converter to which a DC voltage of the battery module is inputted, and the second power supply is an AC/DC converter to which an AC voltage of a commercial power supply is inputted.
